(19) Europäisches Patentamt / European Patent Office / Office européen des brevets

(11) **EP 3 568 615 B1**

(12) **FASCICULE DE BREVET EUROPEEN**

(45) Date de publication et mention de la délivrance du brevet:
**17.11.2021 Bulletin 2021/46**

(21) Numéro de dépôt: **17832273.1**

(22) Date de dépôt: **21.12.2017**

(51) Int Cl.:
*F16H 61/28* (2006.01)     *F16H 61/12* (2010.01)
*F16H 61/04* (2006.01)     *F16H 63/30* (2006.01)

(86) Numéro de dépôt international:
**PCT/FR2017/053780**

(87) Numéro de publication internationale:
**WO 2018/130758 (19.07.2018 Gazette 2018/29)**

(54) **PROCÉDÉ DE COMMANDE D'UNE BOÎTE DE VITESSES**

VERFAHREN ZUR STEUERUNG EINES GETRIEBES

METHOD FOR CONTROLLING A TRANSMISSION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.01.2017  FR 1750277**

(43) Date de publication de la demande:
**20.11.2019  Bulletin 2019/47**

(73) Titulaires:
• **Renault S.A.S.**
  **92100 Boulogne-Billancourt (FR)**
• **Nissan Motor Co., Ltd.**
  **Yokohama-shi, Kanagawa 221-0023 (JP)**

(72) Inventeurs:
• **CHANTREL, Cédric**
  **94220 Charenton Le Pont (FR)**
• **CHAMEROY, Adrien**
  **78960 Voisins-Le-Bretonneux (FR)**

(74) Mandataire: **Rougemont, Bernard**
  **Renault s.a.s**
  **TCR GRA 2 36 - Sce 00267**
  **1, Avenue du Golf**
  **78084 Guyancourt Cedex (FR)**

(56) Documents cités:
DE-A1-102013 204 666     FR-A1- 3 004 776
FR-A1- 3 030 005         US-A1- 2008 262 685

EP 3 568 615 B1

## Description

L'invention a pour domaine technique la commande de boîte de vitesses, et plus particulièrement, la protection thermique des actionneurs d'une telle boîte.

Les véhicules automobiles muni d'une boîte de vitesse de type locobox, avec un système d'engagement faisant appel à un ressort pour stocker l'énergie de crabotage ou décrabotage présentent un problème relatif à la surchauffe de l'actionneur d'engagement lors du contact dent / dent.

Le document EP2694309 décrit de manière générale les mécanismes de la boîte locobox et son contrôle associé.

Le document EP2726757 décrit de manière générale l'architecture électrique de la boîte locobox et son contrôle associé.

Le document FR3030005 décrit un procédé de diagnostic et de correction dynamique des seuils de désengagement.

L'invention a pour objet un procédé de commande d'une boîte de vitesses de type locobox comprenant au moins un actionneur d'engagement permettant le crabotage ou le décrabotage d'un baladeur et d'un pignon fou. Le procédé comprend les étapes suivantes :

à un premier instant, on récupère les valeurs préalablement déterminées de la vitesse de rotation de la pièce assurant le crabotage, la vitesse de rotation de la cible de crabotage, la consigne de position crabot, la variable booléenne de demande de crabotage, une variable booléenne indiquant un mode de fonctionnement dégradé de l'actionneur d'engagement dû à des conditions thermiques et un glissement nominal,

on définit une consigne de position de crabot retardée fonction de la consigne de position crabot à un instant égal au premier instant moins un retard prédéterminé, on détermine qu'une première valeur est prise par une variable booléenne indiquant que la position crabot retardée est supérieure à un seuil de consigne de position d'engagement, une deuxième valeur prise si tel n'est pas le cas,

on détermine la dérivée filtrée de la position de crabotage consolidée,

on détermine qu'une première valeur est prise par une variable booléenne, indiquant que la dérivée filtrée de la position de crabotage consolidée est inférieure à un seuil pour lequel on considère que le baladeur est bloqué en position dent sur dent, une deuxième valeur prise si tel n'est pas le cas,

on détermine qu'une première valeur est prise par une variable booléenne indiquant le maintien dans le temps d'une dérivée filtrée de la position de crabotage consolidée en dessous du seuil pour lequel on considère que le baladeur est bloqué en position dent sur dent, et qu'une deuxième valeur est prise si tel n'est pas le cas,

on détermine qu'une première valeur est prise par une variable booléenne indiquant le déclenchement d'un contact dent sur dent, si, simultanément, la variable booléenne de demande de crabotage est égale à sa première valeur, si la variable booléenne indiquant que la position crabot retardée est supérieure à un seuil de consigne de position d'engagement est égale à sa première valeur, et si la variable booléenne indiquant le maintien dans le temps d'une dérivée filtrée de la position de crabotage consolidée en dessous du seuil pour lequel on considère que le baladeur est bloqué en position dent sur dent est égale à sa première valeur, et que si tel n'est pas le cas, la variable booléenne indiquant le déclenchement d'un contact dent sur dent prend une deuxième valeur,

on détermine un différentiel de vitesse de rotation de crabotage égal à la différence entre la vitesse de rotation de la pièce assurant le crabotage et la vitesse de rotation de la cible de crabotage,

on détermine une dérivée filtrée du différentiel de vitesse de rotation de crabotage,

on détermine un glissement modifié en fonction du différentiel de vitesse de rotation de crabotage et de la dérivée filtrée du différentiel de vitesse de rotation de crabotage à l'instant où la variable booléenne indiquant le déclenchement d'un contact dent sur dent prend sa première valeur,

on calcule alors une consigne de vitesse de rotation du baladeur égale à la somme de la vitesse de rotation de la cible de crabotage et du glissement nominal si la variable booléenne indiquant un mode de fonctionnement dégradé de l'actionneur d'engagement dû à des conditions thermiques est égale à sa deuxième valeur, et une consigne de vitesse de rotation pour le crabotage égale à la somme de la vitesse de rotation de la cible de crabotage et du glissement modifié si la variable booléenne indiquant un mode de fonctionnement dégradé de l'actionneur d'engagement dû à des conditions thermiques est égale à sa première valeur.

La constante de temps de filtrage de la dérivée filtrée de la position de crabotage consolidée peut être comprise entre 10ms et 500ms.

La constante de temps de filtrage de la dérivée filtrée du différentiel de vitesse de rotation de crabotage peut être comprise entre 10ms et 50ms.

La position de crabot retardée peut être égale à une position de l'actionneur déterminée par un capteur ou à une consigne de position retardée déterminée.

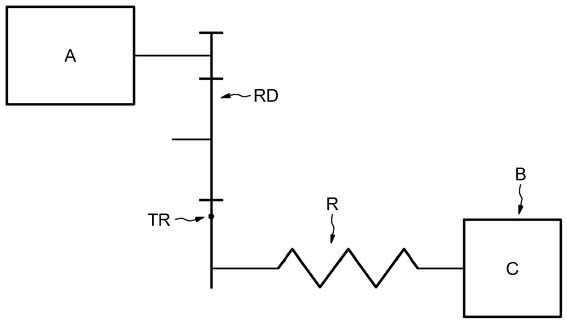

D'autres buts, caractéristiques et avantages de l'invention apparaîtront à la lecture de la description suivante, donnée uniquement à titre d'exemple non limitatif et faite en référence aux dessins annexés sur lesquels la figure unique illustre de façon schématique une chaîne d'actionnement du passage de vitesses dans une boîte de vitesses de type locobox.

L'invention revendiquée dans ce brevet est une stratégie de limitation de l'échauffement d'un actionneur d'engagement par adaptation du glissement de régime en limitant la durée du contact dent / dent lors d'une phase d'engagement lorsque l'actionneur est en fonctionnement dégradé dû à des contraintes thermiques (« thermal derating » en langue anglaise).

La figure unique illustre de façon schématique une chaîne d'actionnement du passage de vitesses dans une boîte de vitesses de type locobox.

On peut voir qu'un actionneur A permet le déplacement d'un clabot C à l'aide d'un système d'assistance comprenant un réducteur RD, un transformateur de mouvement TR et un ressort R. Le ressort R stocke de l'énergie pendant la phase de blocage pour ensuite la restituer lorsque le crabotage ou le décrabotage deviennent possible. Le baladeur B peut alors s'engager dans le pignon fou ou se dégager du pignon fou de manière efficace.

Pour assurer l'engagement d'un rapport, il faut s'assurer de maîtriser le différentiel de vitesse de rotation entre les deux pièces que l'on souhaite craboter. Pour cela, on cherche à asservir la vitesse de rotation d'une des deux pièces à la vitesse de rotation de l'autre pièce à laquelle on ajoute un terme de glissement, généralement constant, avant d'envoyer l'ordre d'engagement. De ce fait le synchronisme entre les deux pièces n'est pas parfait ce qui permet d'obtenir une durée maximale de la phase dent sur dent avec compression du ressort d'assistance à l'engagement.

Cette durée maximale est fonction du glissement et de la géométrie des dents. Durant cette phase, l'échauffement de l'actionneur est important, car il développe un couple important pour maintenir le ressort comprimé.

Dans des conditions nominales, l'échauffement provoqué n'entraîne pas de disfonctionnement de l'actionneur d'engagement. Toutefois, si celui-ci est déjà échauffé par de multiples sollicitations, il est important de diminuer l'échauffement supplémentaire qu'apporte la phase de dent sur dent. Pour réaliser ceci, on peut adapter le terme de glissement durant cette phase.

On définit les variables d'entrée suivantes :

Claw_psn_sp : Consigne de position crabot (en m)
B_crabotage : Demande de crabotage
Claw_psn_cs : Position crabot consolidée (en m)
B_derating_GBA : Variable booléenne indiquant un mode de fonctionnement dégradé de l'actionneur d'engagement dû à des conditions thermiques
Speed_tgt : Vitesse de rotation de la cible de crabotage (en tpm)
Speed_crt ; Vitesse de rotation de la pièce assurant le crabotage (en tpm)
G0 = Glissement nominal (en m)

On définit les variables de sortie suivantes :
Speed_sp : Consigne de vitesse de rotation pour le crabotage (en tpm)
Le procédé de commande comprend les étapes suivantes :
On définit une consigne de position de crabot retardée Claw_psn_sp_delay en appliquant l'équation suivante :

$$Claw\_psn\_sp\_delay(t)=1000*Claw\_psn\_sp(t-t\_delay) \qquad (Eq.1)$$

avec t_delay = retard prédéterminé
On note que t_delay est inférieur à une seconde.
On définit une variable booléenne B_claw_psn_sp_delay_ok, indiquant que la position crabot retardée Claw_psn_sp_delay est supérieure à un seuil de consigne de position d'engagement Seuil_eng. La variable booléenne B_claw_psn_sp_delay_ok prend une première valeur, par exemple 1, si la valeur absolue de la consigne de position crabot retardée Claw_psn_sp_delay est supérieure ou égale au seuil de consigne de position d'engagement Seuil_eng.

$$|Claw\_psn\_sp\_delay(t)| >= Seuil\_eng \qquad (Eq.\ 2)$$

On note que le seuil de consigne de position d'engagement Seuil_eng est compris entre 4.5mm et 6mm.
Si tel n'est pas le cas, la variable booléenne B_claw_psn_sp_delay_ok prend une deuxième valeur, par exemple 0.
On définit la dérivée filtrée de la position de crabotage consolidée Claw_psn_cs_dot_fil tel que :

$$\text{Claw\_psn\_cs\_dot\_fil} = \text{Deriv\_Fil}(1000 * \text{Claw\_psn\_cs})$$

$$(\text{Eq. 3})$$

où Deriv_Fil est une dérivée temporelle filtrée du premier ordre avec une constante de temps Tau_fil comprise entre 10ms et 500ms.

On définit la variable booléenne B_claw_psn_cs_dot_fil_temp, indiquant que la dérivée filtrée de la position de crabotage consolidée Claw_psn_cs_dot_fil est inférieure à un seuil Seuil_der pour lequel on considère que le baladeur est bloqué en position dent sur dent.

La variable booléenne B_claw_psn_cs_dot_fil_temp prend une première valeur, par exemple 1, si la valeur absolue de la dérivée filtrée de la position de crabotage consolidée Claw_psn_cs_dot_fil est inférieure ou égale au seuil Seuil_der

On note que le seuil Seuil_der est compris entre 1mm/s et 5mm/s.

Si tel n'est pas le cas, la variable booléenne B_claw_psn_cs_dot_fil_temp prend une deuxième valeur, par exemple 0.

On définit la variable booléenne B_claw_psn_cs_dot_fil_ok indiquant le maintien dans le temps d'une dérivée filtrée Claw_psn_cs_dot_fil en dessous du seuil Seuil_der.

La variable booléenne B_claw_psn_cs_dot_fil_ok prend une première valeur, par exemple 1, si la variable booléenne B_claw_psn_cs_dot_fil_temp est égale à sa première valeur, pendant une durée tempo_confir inférieure ou égale à 100ms à partir du moment où B_claw_psn_cs_dot_fil_temp est égale à sa première valeur. Si tel n'est pas le cas, la variable booléenne B_claw_psn_cs_dot_fil_ok prend une deuxième valeur, par exemple 0.

On définit la variable booléenne B_trig_dent_dent indiquant le déclenchement d'un contact dent sur dent.

La variable booléenne B_trig_dent_dent prend une première valeur, par exemple 1, si, simultanément, la variable booléenne B_crabotage est égale à sa première valeur, si la variable booléenne B_claw_psn_sp_delay_ok est égale à sa première valeur, et si la variable booléenne B_claw_psn_cs_dot_fil_ok est égale à sa première valeur.

Si tel n'est pas le cas, la variable booléenne B_trig_dent_dent prend une deuxième valeur, par exemple 0.

On définit un différentiel de vitesse de rotation de crabotage Delta speed tel que :

$$\text{Delta\_speed} = \text{Speed\_crt} - \text{Speed\_tgt} \qquad (\text{Eq. 4})$$

On définit une dérivée filtrée du différentiel de vitesse de rotation de crabotage Delta_speed_dot_fil tel que :

$$\text{Delta\_speed\_dot\_fil} = \text{Deriv\_Fil\_2}(\text{Delta\_speed})$$

où Deriv_Fil_2 est une dérivée temporelle filtrée du premier ordre avec une constante de temps Tau_fil_2 comprise entre 10ms et 50ms.

On définit un glissement modifié G1 en fonction des variables Delta_speed_dot_fil et Delta_speed à l'instant où la variable booléenne B_trig_dent_dent prend sa première valeur par les relations de la table suivante :

| | Delta_speed_dot_fil < -Eps2 | \|Delta_speed_dot_fil\| <= Eps2 | Delta_speed_dot_fil > Eps2 |
|---|---|---|---|
| Delta_speed > (G0 + Eps1) | G1 = G0 - (G0/2) + alpha * (G0/2) | G1 = G0 - (G0/2) | G1 = G0 - (G0/2) - alpha * (G0/2) |
| (G0 - Eps1) <= Delta_speed <= (G0 + Eps1) | G1 = G0 + alpha * (G0/2) | G1=G0 | G1 = G0 - alpha * (G0/2) |
| 0 <= Delta_speed < (G0 - Eps1) | G1 = G0 + (G0/2) + alpha * (G0/2) | G1 = G0 + (G0/2) | G1 = G0 + (G0/2) - alpha * (G0/2) |
| (Eps1 - G0) < Delta_speed < 0 | G1 = G0 - (G0/2) + alpha * (G0/2) | G1 = G0 - (G0/2) | G1 = G0 - (G0/2) - alpha * (G0/2) |
| (-G0- Eps1) <= Delta_speed <= (-G0 + Eps1) | G1 = G0 + alpha * (G0/2) | G1 = G0 | G1 = G0 - alpha * (G0/2) |

(suite)

| | Delta_speed_dot_fil < -Eps2 | \|Delta_speed_dot_fil\| <= Eps2 | Delta_speed_dot_fil > Eps2 |
|---|---|---|---|
| Delta_speed < (-G0 - Eps1) | G1 = G0 + (G0/2) + alpha * (G0/2) | G1 = G0 + (G0/2) | G1 = G0 + (G0/2) - alpha * (G0/2) |

Avec

Eps1 : paramètre de position compris dans la gamme de valeurs [0 ; G0[ avec comme valeur par défaut G0/2
Eps2 : paramètre d'accélération compris dans la gamme de valeurs [0 ; 10000tpm/s] avec comme valeur par défaut 500 tpm/s
Alpha : paramètre de pondération compris dans la gamme de valeurs [0 ; 2] avec comme valeur par défaut 1

On calcule alors la consigne de vitesse de rotation du baladeur Speed_sp tel que :

Speed_sp = Speed_tgt + G0 si la variable booléenne B_derating_GBA est égale à sa deuxième valeur, et
Speed_sp = Speed_tgt + G1 si B_derating_GBA si la variable booléenne B_derating_GBA est égale à sa première valeur.

Selon un mode de réalisation alternatif de l'invention, on peut utiliser la position de l'actionneur, déterminée via un capteur, à la place de la consigne de position crabot retardée Claw_psn_sp_delay au niveau de la détermination de variable booléenne B_claw_psn_sp_delay_ok et de l'équation 2.

Le procédé de commande permet de limiter l'échauffement de l'actionneur d'engagement mais ne permet pas de le supprimer complètement. Le dimensionnement thermique de l'actionneur d'engagement doit rester cohérent avec la définition technique de la boîte de vitesses.

## Revendications

1. Procédé de commande d'une boîte de vitesses comprenant au moins un actionneur d'engagement permettant le crabotage ou le décrabotage d'un baladeur et d'un pignon fou, **caractérisé par le fait qu'**il comprend les étapes suivantes :

   à un premier instant, on récupère les valeurs préalablement déterminées de la vitesse de rotation de la pièce assurant le crabotage (Speed_crt), la vitesse de rotation de la cible de crabotage (Speed_tgt), la consigne de position crabot (Claw-psn-sp), la variable booléenne de demande de crabotage (B_crabotage), une variable booléenne (B_derating_GBA) indiquant un mode de fonctionnement dégradé de l'actionneur d'engagement dû à des conditions thermiques et un glissement nominal,
   on définit une consigne de position de crabot retardée (Claw_psn_sp_delay) fonction de la consigne de position crabot à un instant égal au premier instant moins un retard prédéterminé, On détermine qu'une première valeur est prise par une variable booléenne indiquant que la position crabot retardée est supérieure à un seuil de consigne de position d'engagement, une deuxième valeur prise si tel n'est pas le cas,
   on détermine la dérivée filtrée de la position de crabotage consolidée (Claw_psn_cs_dot_fil),
   on détermine qu'une première valeur est prise par une variable booléenne, indiquant que la dérivée filtrée de la position de crabotage consolidée est inférieure à un seuil pour lequel on considère que le baladeur est bloqué en position dent sur dent, une deuxième valeur prise si tel n'est pas le cas,
   on détermine qu'une première valeur est prise par une variable booléenne indiquant le maintien dans le temps d'une dérivée filtrée de la position de crabotage consolidée en dessous du seuil pour lequel on considère que le baladeur est bloqué en position dent sur dent, et qu'une deuxième valeur est prise si tel n'est pas le cas,
   on détermine qu'une première valeur est prise par une variable booléenne indiquant le déclenchement d'un contact dent sur dent, dent (B_trig_dent_dent), si, simultanément, la variable booléenne de demande de crabotage est égale à sa première valeur, si la variable booléenne indiquant que la position crabot retardée est supérieure à un seuil de consigne de position d'engagement est égale à sa première valeur, et si la variable booléenne indiquant le maintien dans le temps d'une dérivée filtrée de la position de crabotage consolidée en dessous du seuil pour lequel on considère que le baladeur est bloqué en position dent sur dent est égale à sa première valeur, si tel n'est pas le cas, la variable booléenne indiquant le déclenchement d'un contact dent sur dent prend une deuxième valeur,

on détermine un différentiel de vitesse de rotation de crabotage (Delta_speed) égal à la différence entre la vitesse de rotation de la pièce assurant le crabotage et la vitesse de rotation de la cible de crabotage,

on détermine une dérivée filtrée du différentiel de vitesse de rotation de crabotage (Delta_speed_dot_fil),

on détermine un glissement modifié (G1) en fonction du différentiel de vitesse de rotation de crabotage et de la dérivée filtrée du différentiel de vitesse de rotation de crabotage à l'instant où la variable booléenne indiquant le déclenchement d'un contact dent sur dent (B_trig_dent_dent) prend sa première valeur,

on calcule alors une consigne de vitesse de rotation du baladeur (Speed_sp) égale à la somme de la vitesse de rotation de la cible de crabotage (Speed_tgt) et du glissement nominal (G0) si la variable booléenne indiquant un mode de fonctionnement dégradé de l'actionneur d'engagement dû à des conditions thermiques (B_derating_GBA) est égale à sa deuxième valeur, et une consigne de vitesse de rotation pour le crabotage égale à la somme de la vitesse de rotation de la cible de crabotage (Speed_tgt) et du glissement modifié (G1) si la variable booléenne indiquant un mode de fonctionnement dégradé de l'actionneur d'engagement dû à des conditions thermiques est égale à sa première valeur.

2. Procédé de commande selon la revendication 1, dans lequel la constante de temps de filtrage de la dérivée filtrée de la position de crabotage consolidée est comprise entre 10ms et 500ms.

3. Procédé de commande selon l'une quelconque des revendications précédentes, dans lequel la constante de temps de filtrage de la dérivée filtrée du différentiel de vitesse de rotation de crabotage est comprise entre 10ms et 50ms.

4. Procédé de commande selon l'une quelconque des revendications précédentes, dans lequel la position de crabot retardée est égale à une position de l'actionneur déterminée par un capteur ou à une consigne de position retardée déterminée.

**Patentansprüche**

1. Verfahren zum Steuern eines Getriebes, das mindestens einen Eingriffsaktuator enthält, der die Klauenkupplung oder die Auskupplung eines Schieberads und eines Losrads ermöglicht, **dadurch gekennzeichnet, dass** es die folgenden Schritte enthält:

zu einem ersten Zeitpunkt werden die vorab bestimmten Werte der Drehzahl des die Klauenkupplung gewährleistenden Bauteils (Speed_crt), der Drehzahl des Klauenkupplungsziels (Speed_tgt), des Klauenpositionssollwerts (Claw_psn_sp), der Booleschen Variablen einer Klauenkupplungsanforderung (B_crabotage), einer Booleschen Variablen (B_derating_GBA), die eine eingeschränkte Betriebsart des Eingriffsaktuators aufgrund von thermischen Bedingungen und einen Nennschlupf anzeigt, abgerufen,

es wird ein verzögerter Klauenpositionssollwert (Claw_psn_sp_delay) abhängig vom Klauenpositionssollwert zu einem Zeitpunkt gleich dem ersten Zeitpunkt minus eine vorbestimmte Verzögerung definiert, es wird bestimmt, dass ein erster Wert von einer Booleschen Variablen angenommen wird, der anzeigt, dass die verzögerte Klauenposition über einer Eingriffspositionssollwertschwelle liegt, ein zweiter Wert angenommen wird, wenn dies nicht der Fall ist,

die gefilterte Ableitung der konsolidierten Klauenkupplungsposition (Claw_psn_cs_dot_fil) wird bestimmt,

es wird bestimmt, dass ein erster Wert von einer Booleschen Variablen angenommen wird, der anzeigt, dass die gefilterte Ableitung der konsolidierten Klauenkupplungsposition unter einer Schwelle liegt, für die angenommen wird, dass das Schieberad Zahn auf Zahn in Position blockiert ist, ein zweiter Wert angenommen wird, wenn dies nicht der Fall ist,

es wird bestimmt, dass ein erster Wert von einer Booleschen Variablen angenommen wird, der die zeitliche Beibehaltung einer gefilterten Ableitung der konsolidierten Klauenkupplungsposition unter der Schwelle anzeigt, für die angenommen wird, dass das Schieberad Zahn auf Zahn blockiert ist, und dass ein zweiter Wert angenommen wird, wenn dies nicht der Fall ist,

es wird bestimmt, dass ein erster Wert von einer Booleschen Variablen angenommen wird, der das Auslösen eines Kontakts Zahn auf Zahn, dent(B_trig_dent_dent), anzeigt, wenn gleichzeitig die Boolesche Variable der Klauenkupplungsanforderung gleich ihrem ersten Wert ist, wenn die Boolesche Variable, die anzeigt, dass die verzögerte Klauenposition über einer Sollschwelle einer Eingriffsposition liegt, gleich ihrem ersten ersten Wert ist, und wenn die Boolesche Variable, die die zeitliche Beibehaltung einer gefilterten Ableitung der konsolidierten Klauenkupplungsposition unter der Schwelle anzeigt, für die angenommen wird, dass das Schieberad in der Position Zahn auf Zahn blockiert ist, gleich ihrem ersten Wert ist, wenn dies nicht der Fall ist, nimmt die Boolesche Variable, die das Auslösen eines Kontakts Zahn auf Zahn anzeigt, einen zweiten Wert an,

es wird eine Klauenkupplungs-Drehzahldifferenz (Delta_speed) gleich der Differenz zwischen der Drehzahl des die Klauenkupplung gewährleistenden Bauteils und der Drehzahl des Klauenkupplungsziels bestimmt,

es wird eine gefilterte Ableitung der Klauenkupplungs-Drehzahldifferenz (Delta_speed_dot_fil) bestimmt,

es wird ein veränderter Schlupf (G1) abhängig von der Klauenkupplungs-Drehzahldifferenz und von der gefilterten Ableitung der Klauenkupplungs-Drehzahldifferenz zu dem Zeitpunkt bestimmt, zu dem die Boolesche Variable, die das Auslösen eines Kontakts Zahn auf Zahn (B_trig_dent_dent) anzeigt, ihren ersten Wert annimmt,

dann wird ein Drehzahlsollwert des Schieberads (Speed_sp) gleich der Summe der Drehzahl des Klauenkupplungsziels (Speed_tgt) und des Nennschlupfs (G0), wenn die Boolesche Variable, die eine eingeschränkte Betriebsart des Eingriffsaktuators aufgrund von thermischen Bedingungen (B_derating_GBA) anzeigt, gleich ihrem zweiten Wert ist, und ein Drehzahlsollwert für die Klauenkupplung gleich der Summe der Drehzahl des Klauenkupplungsziels (Speed_tgt) und des veränderten Schlupfs (G1) berechnet, wenn die Boolesche Variable, die eine eingeschränkte Betriebsart des Eingriffsaktuators aufgrund von thermischen Bedingungen anzeigt, gleich ihrem ersten Wert ist.

2. Steuerverfahren nach Anspruch 1, wobei die Filterzeitkonstante der gefilterten Ableitung der konsolidierten Klauenkupplungsposition zwischen 10ms und 500ms liegt.

3. Steuerverfahren nach einem der vorhergehenden Ansprüche, wobei die Filterzeitkonstante der gefilterten Ableitung der Klauenkupplungs-Drehzahldifferenz zwischen 10ms und 50ms liegt.

4. Steuerverfahren nach einem der vorhergehenden Ansprüche, wobei die verzögerte Klauenposition gleich einer von einem Sensor bestimmten Position des Aktuators oder gleich einem bestimmten verzögerten Positionssollwert ist.

## Claims

1. Method for controlling a gearbox including at least one engagement actuator enabling the coupling or declutching of a sliding gear and of an idler gear, **characterized in that** it includes the following steps:

at a first instant, predetermined values are retrieved for the rotational speed of the coupling part (Speed_crt), the rotational speed of the coupling target (Speed_tgt), the dog position setpoint (Claw_psn_sp), the Boolean coupling-request variable (B_crabotage), a Boolean variable (B_derating_GBA) indicating a degraded operating mode of the engagement actuator caused by thermal conditions and a nominal slip,

a retarded dog-position setpoint (Claw_psn_sp_delay) is determined as a function of the dog position setpoint at an instant equal to the first instant less a predetermined delay, and it is determined that a first value is adopted by a Boolean variable indicating that the retarded dog position is greater than an engaged position setpoint threshold, and a second value is adopted if this is not the case,

the filtered derivative of the consolidated coupling position (Claw_psn_cs_dot_fil) is determined,

it is determined that a first value is adopted by a Boolean variable, indicating that the filtered derivative of the consolidated coupling position is less than a threshold for which the sliding gear is considered to be blocked in a tooth-to-tooth position, and a second value is adopted if this is not the case,

it is determined that a first value is adopted by a Boolean variable, indicating the maintenance in time of a filtered derivative of the consolidated coupling position below the threshold for which the sliding gear is considered to be blocked in a tooth-to-tooth position, and that a second value is adopted if this is not the case,

it is determined that a first value is adopted by a Boolean variable indicating the triggering of a tooth-to-tooth contact (B_trig_dent_dent) if, simultaneously, the Boolean coupling-request variable is equal to the first value thereof, if the Boolean variable indicating that the retarded dog position is greater than an engaged position setpoint threshold is equal to the first value thereof, and if the Boolean variable indicating the maintenance in time of a filtered derivative of the consolidated coupling position below the threshold for which the sliding gear is considered to be blocked in a tooth-to-tooth position is equal to the first value thereof, and if this is not the case, the Boolean variable indicating the triggering of a tooth-to-tooth contact adopts a second value,

a coupling rotation speed differential (Delta_speed) equal to the difference between the rotational speed of the coupling part and the rotational speed of the coupling target is determined,

a filtered derivative of the coupling rotation speed differential (Delta_speed_dot_fil) is determined,

a modified slip (G1) is determined as a function of the coupling rotation speed differential and of the filtered derivative of the coupling rotation speed differential at the instant at which the Boolean variable indicating the triggering of a tooth-to-tooth contact (B_trig_dent_dent) adopts the first value thereof,

a setpoint rotational speed of the sliding gear (Speed_sp), equal to the sum of the rotational speed of the coupling target (Speed_tgt) and of the nominal slip (G0) is then calculated if the Boolean variable indicating a degraded operating mode of the engagement actuator due to thermal conditions (B_derating_GBA) is equal to the second value thereof, and a setpoint rotational speed for the coupling equal to the sum of the rotational speed of the coupling target (Speed_tgt) and of the modified slip (G1) is then calculated if the Boolean variable indicating a degraded operating mode of the engagement actuator due to thermal conditions is equal to the first value thereof.

2. Control method according to Claim 1, in which the filtering time constant for the filtered derivative of the consolidated coupling position is between 10 ms and 500 ms.

3. Control method according to any one of the preceding claims, in which the filtering time constant for the filtered derivative of the coupling rotation speed differential is between 10 ms and 50 ms.

4. Control method according to any one of the preceding claims, in which the retarded dog position is equal to an actuator position determined by a sensor or to a determined retarded position setpoint.

A

RD

TR

R

B

C

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2694309 A
- EP 2726757 A
- FR 3030005